# EUROPÄISCHE PATENTSCHRIFT

(11) **EP 2 471 764 B1**
(45) Veröffentlichungstag und Bekanntmachung des Hinweises auf die Patenterteilung: **11.05.2016**
(21) Anmeldenummer: 10197217.2
(22) Anmeldetag: 28.12.2010
(51) Int. Cl.: C04B 35/573, C04B 35/80, C04B 37/00, F16D 65/12, F16D 69/02

(54) **Verfahren zur Herstellung von Reibscheiben mit strukturierter keramischer Reibschicht**
Process for producing friction disks having a structured ceramic friction Layer
Procédé pour fabriquer des disques de frottement dotés d'une couche de frottement structurée en céramique

(43) Veröffentlichungstag der Anmeldung: 04.07.2012
(73) Patentinhaber: SGL Carbon SE, 65201 Wiesbaden (DE)
(72) Erfinder: Kienzle, Andreas, 86753 MÖTTINGEN Ortsteil BALGHEIM (DE); Krätschmer, Ingrid, 86485 BIBERBACH (DE)

(56) Entgegenhaltungen:
- EP-A2- 1 277 715
- EP-A2- 1 314 708
- EP-A2- 2 058 545
- EP-A2- 2 058 546
- DE-A1- 4 438 456

## Beschreibung

Die Erfindung betrifft ein Verfahren zur Herstellung von Reibscheiben mit strukturierter keramischer Reibschicht, insbesondere Bremsscheiben umfassend einen keramischen Tragkörper und mindestens eine Reibschicht,, wobei der Tragkörper und/oder die Reibschicht aus mit Carbonfasern verstärkten keramischen Werkstoffen (Carbon-Keramik) ausgeführt sein können.

Carbon-Keramik-Bremsscheiben mit keramischen Reibschichten sind bekannt unter anderem aus dem Europäischen Patent EP 1 273 818 B1. In dem Europäischen Patent EP 1 251 290 B1 sind solche Reibscheiben beschrieben, deren Reibschicht Ausnehmungen aufweist, die radialtrapezförmige, spiral- oder evolventenförmig gekrümmte, ellipsenförmige, kreisförmige oder polygonale Gestalt aufweisen können und eine Verbesserung der Kühlung der Carbon-Keramik-Bremsscheibe bewirken. Aus dem Europäischen Patent EP 1 314 708 B1 ist ein Formkörper aus faserverstärkten Verbundwerkstoffen mit segmentierter Deckschicht bekannt. Dabei sind die Segmente aus keramischem Material bevorzugt durch Stege oder stegförmige Bereiche von gegenüber der Reibschicht unterschiedlichem Material voneinander getrennt. Der mittlere Durchmesser der Segmente ist bevorzugt mindestens 3 mm, und die Dicke der Stege beträgt vorzugsweise 0,1 mm bis 10 mm. Aus der Patentanmeldung EP 2 213 902 A2 sind Reibscheiben mit strukturierter Reibschicht bekannt, die eine durch Nuten in Segmente aufgeteilte Reibschicht aufweisen. Dabei beträgt die Breite der Nuten zwischen 0,1 mm und 5 mm, und ihre Tiefe mindestens 0,4 mm. Derartige Reibscheiben weisen ein verbessertes Nassansprechverhalten auf.

Bei den Untersuchungen, die zu der vorliegenden Erfindung geführt haben, ergab sich, dass das Nassansprechverhalten und der Aufbau eines stabilen Reibwerts beim Kontakt des Bremsbelags mit der Reibfläche einer Carbon-Keramik-Bremsscheibe bei Anwesenheit von Wasser oder wässrigen Lösungen oder wässrigen Aufschlämmungen immer noch verbesserungsbedürftig sind.

Es besteht daher die Aufgabe, eine Reibscheibe, speziell eine Carbon-Keramik-Bremsscheibe, so auszuführen, dass sowohl das Nassansprechverhalten als auch der Aufbau des Reibwerts verbessert werden.

Es wurde gefunden, dass dieses Ziel erreicht werden kann durch eine ausgewählte Strukturierung des Entspannungsgefüges der Reibschicht, das sich bei der Abkühlung einer Reibscheibe, speziell einer Carbon-Keramik-Bremsscheibe, umfassend einen Tragkörper mit einer Matrix enthaltend Siliciumcarbid und mindestens eine, bevorzugt jeweils eine auf der oberen und der unteren Deckfläche des zylinderringförmigen Tragkörpers angeordnete, mit diesem flächig verbundene Reibschicht nach deren Behandlung mit Silicium bildet.

Wegen der unterschiedlichen thermischen Ausdehnung der Werkstoffe von Tragkörper und der darauf fixierten Reibschicht oder Reibschichten bildet sich beim Abkühlen nach der Silicierung mit flüssigem Silicium bei einer Temperatur oberhalb der Schmelztemperatur des Silicium von 1420 °C, also durch Temperaturerniedrigung um mindestens 1000 K, ein zufälliges Rissmuster in der Reibschicht.

Werden diese Reibschichten von einem gezielt ausgebildeten Rissmuster durchzogen, so können das Nassansprechverhalten und der Aufbau eines stabilen Reibwerts beim Kontakt zwischen Bremsbelag und Reibfläche bei Anwesenheit von Wasser in dem aus Bremsbelägen und Bremsscheibe gebildeten Bremssystem so beeinflusst werden, dass innerhalb einer Ansprechzeit von weniger als 2 s, insbesondere innerhalb von 1 s bis 3 s bereits ein stabiles Bremsverhalten mit einer Reibungszahl erreicht wird, die gegenüber einer Trockenbremsung um weniger als 50 % vermindert ist. Dabei ist keine Verlängerung dieser Ansprechzeit mit zunehmender Nutzungsdauer der Bremsscheibe festzustellen. Der starke Abfall der Reibungszahl bei einer nicht gezielt strukturierten Reibschicht auf bis zu 25 % des Wertes für dieselbe Paarung unter trockenen Bedingungen kann so vermieden werden.

Es wurde gefunden, dass sich die gezielte Ausbildung eines Rissmusters charakterisiert durch die Breite der Risse zwischen den von Rissen umgebenen erhabenen Segmenten in der Reibschicht und die Größe und Größenverteilung dieser Segmente steuern lässt durch die Zusammensetzung und die Dicke einer zwischen Reibschicht und Tragkörper befindlichen Zwischenschicht oder Klebeschicht, die bei der Montage der Grünkörper für Tragkörper und Reibschichten zwischen diese eingebracht wird.

Diese Zwischenschicht oder Klebeschicht diente ansonsten nur zur Fixierung der mindestens einen Reibschicht, im Fall einer Carbon-Keramik-Bremsscheibe auf dem porösen, mit Fasern aus Kohlenstoff verstärkten Tragkörper aus Kohlenstoff vor den weiteren Bearbeitungsschritten. Eine derartige Zwischenschicht ist beispielsweise aus der Patentanmeldung DE 44 38 456 A1 bekannt, wobei zwischen Tragkörper und Reibschicht einer mehrschichtigen Carbon-Keramik-Bremsscheibe bei der Herstellung eine Einlage eingebracht werden kann, die aus einem porösen pyrolysierbaren Material auf Cellulosebasis besteht, aber auch ein Kohlenstoff-Vlies oder eine Kohlenstoff-Matte sein kann. Diese Zwischenschicht bedeckt die gesamte Kontaktfläche zwischen Tragkörper und Reibschicht. Beim Silicieren wird diese Zwischenschicht zunächst bei Erhitzen unter Ausschluss von oxydierenden Gasen carbonisiert, und dann gemeinsam mit der Reibschicht (oder den Reibschichten) und dem Tragkörper mit Silicium infiltriert, wobei der bei der Pyrolyse des Materials der Zwischenschicht gebildete Kohlenstoff zumindest teilweise in Siliciumcarbid umgewandelt wird.

Dieser Zwischenschicht kommt nun eine neue Aufgabe zu. Durch eine Strukturierung dieser Zwischenschicht, die in den Dokumenten des Standes der Technik homogen war, in Bereiche mit unterschiedlichen thermischen Ausdehnungskoeffizienten, beispielsweise durch unterschiedliche stoffliche Zusammensetzungen wie durch Zugabe von Siliciumcarbid-Pulver oder Kohlenstoffpulver in die Klebermasse oder durch unterschiedliche Bindemittel in der Klebemasse, beispielsweise unterschiedliche Mischungsverhältnisse von Phenolharzen und Pechen, werden in der Zwischenschicht zwischen Reibschicht und Tragkörper bei der Abkühlung nach der Silicierung Spannungen erzeugt, die zur gezielten Bildung von Rissen in der keramischen Reibschicht führen.

Die unterschiedliche thermische Ausdehnung kann in bevorzugter Weise auch durch eine Zwischenschicht erreicht werden, die ein Gewebe aus Filamentbündeln, bevorzugt aus Kohlenstoff, enthält. Die Filamente aus Kohlenstoff sind in üblicher Weise gebündelt, wobei die üblichen Filamentgarne mit 3000, 6000 oder 12000 Filamenten je Garnstrang ("3 k", "6 k", "12 k") bevorzugt eingesetzt werden. Da der thermische Ausdehnungskoeffizient dieser Filamente in Längsrichtung und senkrecht dazu deutlich verschieden ist (bei carbonisierten Filamenten auf Basis von Polyacrylnitril longitudinal - 0,6 · 10⁻⁶ K⁻¹ bis - 0,75 · 10⁻⁶ K⁻¹, und transversal 8 · 10⁻6 K⁻¹ bis 9 · 10⁻⁶ K⁻¹), kann durch geeignete Wahl der Filamentzahl je Garnstrang und der Bindung im Gewebe ein Spannungsmuster beim Abkühlen in der Zwischenschicht erzeugt werden, das zur gezielten Ausbildung von Rissen führt. Ferner ist es bevorzugt auch möglich, zwischen den Schuss- und Kettgarnstrang jeweils Bereiche freizulassen, sodass ein siebartiges Gewebe oder Geflecht mit Zwischenräumen zwischen den einzelnen Schuss- und Kett-Garnsträngen entsteht.

Die so aufgebrachte Struktur dieser Zwischenschicht führt in der Reibschicht bei der Abkühlung nach der Silicierung zu einem definierten Entspannungsrissgefüge, das wiederum bei geeigneter Wahl der Abmessungen zu einer Verbesserung des Reibwertaufbaus beim Nassbremsen führt. Die Geschwindigkeit des Reibwertaufbaus kann dabei in überraschender Weise durch die Größe der zusammenhängenden Reibschichtbereiche beeinflusst werden. Es wurde gefunden, dass die Geschwindigkeit des Reibwertaufbaus dabei ungefähr umgekehrt proportional ist zur Größe dieser zusammenhängenden Reibschichtbereiche.

Die Erfindung beschreibt ein Verfahren zur Herstellung einer Reibscheibe umfassend einen Tragkörper und mindestens eine Reibschicht, sowie jeweils eine zwischen Tragkörper und Reibschicht angeordnete Zwischenschicht, wobei die Zwischenschicht aneinandergrenzende flächige Bereiche mit unterschiedlicher thermischer Ausdehnung aufweist. Bevorzugt beträgt der Unterschied in der thermischen Ausdehnung aneinandergrenzender Bereiche mit unterschiedlicher thermischer Ausdehnung mindestens 5 % des jeweils höheren Wertes für den linearen thermischen Ausdehnungskoeffizienten, bevorzugt mindestens 10 % dieses Wertes. Als flächiger Bereich wird ein Bereich bezeichnet, der sich in der Ebene senkrecht zur Symmetrie- oder Rotationsachse der zylinderringförmigen Reibscheibe erstreckt.

Die Erfindung betrifft ein Verfahren zur Herstellung von Reibscheiben mit einem definierten Entspannungsrissgefüge in der Reibschicht, umfassend die Schritte
- Herstellung eines Vorkörpers für den Tragkörper aus porösem Kohlenstoff, der bevorzugt mit hochtemperaturbeständigen Fasern verstärkt ist,
- Herstellung eines Vorkörpers für den Reibschichtkörper aus porösem Kohlenstoff, der in bevorzugter Weise Siliciumcarbid als Füllstoff enthält,
- Aufkleben mindestens eines Reibschicht-Vorkörpers auf dem Tragschichtvorkörper mittels einer Klebeschicht, enthaltend als organisches Bindemittel ein härtbares Kunstharz sowie gegebenenfalls Pech und/oder einen thermoplastischen Kunststoff, und mindestens einen der Zuschläge ausgewählt aus elementarem Kohlenstoff, Carbiden, Nitriden und Siliciden von Metallen und von Halbmetallen der Gruppen 3b, 4b und 5b des Periodischen Systems der Elemente, hochtemperaturbeständigen Fasern ausgewählt aus Carbonfasern, Fasern von binären und ternären Verbindungen der Elemente Si, C, N, B, O, und P, und Whiskern von refraktären Metallen,
- Pyrolyse des gebildeten Verbunds unter Ausschluss von oxydierenden Stoffen unter Bildung von Kohlenstoff aus dem organischen Bindemittel, und
- Infiltrieren des carbonisierten Verbundes mit flüssigem Silicium oder einer flüssigen Legierung enthaltend einen Massenanteil von mindestens 50 % an Silicium unter Bildung von Carbiden aus Silicium und gegebenenfalls den anderen Legierungsbestandteilen, und
- Abkühlen des silicierten Verbundes mit einem wählbaren Temperaturprofil,
bei dem aus der Klebeschicht durch die Schritte Carbonisierung und Infiltration mit anschließenden Reaktion zu Carbiden eine Zwischenschicht gebildet wird.

In erfindungsgemäßer Weise wird die Klebeschicht gebildet aus
- einem Carbonfilamentbündel-Gittergewebe in Leinwandbindung, das mit einem Klebstoff getränkt oder beschichtet ist, der durch Erhitzen unter Ausschluss von oxydierenden Substanzen auf Temperaturen von ca. 800 °C oder mehr in Kohlenstoff umgewandelt werden kann,
- durch ungleichmäßiges Auftragen eines Klebstoffs bevorzugt in Form eines Gitters, das sich weiter bevorzugt in rechtem Winkel schneidet, oder eines Spinnennetzes mit konzentrischen Kreisen oder Spiralen und Radien, die diese Kreise oder Spiralen schneiden, durch Siebdruck, oder durch einen rechnergesteuerten Applikator, oder
- durch Verfestigen des Klebstoffs auf einer antiadhäsiv behandelten glatten Oberfläche zur Bildung einer Folie, aus der ein gitterförmiger Aufleger gestanzt wird, der durch weiteres Erwärmen wieder in einen klebenden Zustand übergeht, bevor der Zustand eines vernetzten und unschmelzbaren Duroplasten erreicht wird.

Die Variante mit der Folie wird bevorzugt erreicht durch Verfestigen des Klebstoffs auf einerantiadhäsiv behandelten glatten Oberfläche wie Glas oder poliertem Metall durch Erwärmen auf einen Zustand (bei Phenol-Resol-Harzen der sogenannte B-Zustand), der es erlaubt, die durch Verfestigung entstandene Folie zu einem gitterförmigen Aufleger zu stanzen, und der später durch weiteres Erwärmen wieder in einen klebenden Zustand übergeht, bevor der C-Zustand (bei Phenol-Resol-Harzen die Resitbildung) erreicht ist zum vernetzten und unschmelzbaren Duroplast.

Dieser Klebstoff ist bevorzugt ein duroplastisches Harz, oder Pech, oder eine Mischung von diesen, wobei der Klebstoff auch weitere Zuschläge wie wärmebeständige anorganische Materialien enthalten kann. Bevorzugt sind als solche Pulver von Siliciumcarbid, Borcarbid, Titanborid, oder Bornitrid. Es ist auch erfindungsgemäß möglich, den Klebstoff durch Aufstreuen oder durch Zumischen von wärmebeständigen Fasern wie Fasern aus Kohlenstoff, aus Siliciumcarbid oder Siliciumnitrid, sowie Whiskern aus keramischen oder metallischen Werkstoffen so zu modifizieren, dass beim Erstarren des Klebstoffs durch diese Beimischungen anisotrope Gebilde entstehen. Die dazu verwendeten Fasern haben üblicherweise mittlere Längen von bis zu 5 mm.

Die in der Zwischenschicht ausgebildete Struktur hat bevorzugt eine mittlere Ausdehnung parallel zur Bodenfläche oder Deckfläche der zylinderringförmigen Reibscheibe der einzelnen flächigen Bereiche, die durch die Carbonisierung zu Kohlenstoff-haltigen Schichten mit unterschiedlichem thermischen Ausdehnungskoeffizienten werden, von 2 mm bis 8 mm, besonders bevorzugt von 3 mm bis 7 mm, und insbesondere von 4 mm bis 6 mm.

Die Dicke dieser Bereiche in der Zwischenschicht beträgt im carbonisierten Zustand bevorzugt zwischen 0,2 mm und 2 mm.

Die durch das erfindungsgemäße Verfahren erhaltenen Reibscheiben eignen sich für die Verwendung als Teile von Brems- und Kupplungssystemen insbesondere für Kraftfahrzeuge.

Der Tragkörper besteht bevorzugt aus einem mit überwiegend durch Kurzfasern oder Kurzfaserbündeln aus Kohlenstoff verstärkten keramischen Werkstoff, der Siliciumcarbid, Silicium und Kohlenstoff enthält. Als Kurzfasern werden Fasern mit einer Länge von bis zu 60 mm bezeichnet. Die Bündel enthalten bevorzugt ca. 1000 bis zu ca. 12 000 Einzelfasern. Für den Tragkörper ist es auch möglich, die Verstärkung durch Langfasern (Filamentgarne oder Filamentbündel mit bevorzugt 1000 bis 12000 Filamenten je Bündel oder Garnstrang) mit Längen über 50 mm zu bewirken. Bei den Fasern und Filamenten handelt es sich üblicherweise um kohlenstoffhaltige Fasern oder Filamente, bevorzugt aus Kohlenstoff oder Graphit, die besonders bevorzugt mit zusätzlichem Kohlenstoff beschichtet sind. Der Massenanteil an Fasern und Filamenten liegt im Bereich von 20 % bis 60 %, der Massenanteil an SiC liegt im Bereich von 30 % bis 70 % und der Massenanteil an Si liegt im Bereich von 0 % bis 30 %, wobei alle Massenanteile in % bezogen sind auf die Gesamtmasse des Tragkörpers. Der Massenanteil an nicht umgesetztem Kohlenstoff, der nicht in Form von Fasern oder Filamenten vorliegt, im Tragkörper ist im Allgemeinen weniger als 15 %.

Die Zusammensetzung der Reibschicht liegt üblicherweise bei einem Massenanteil an (Kurz) Fasern im Bereich von 0 % bis 35 %, der Massenanteil an SiC in der Reibschicht liegt im Bereich von 45 % bis 100 % und der Massenanteil an Si in der Reibschicht liegt im Bereich von 0 % bis 30 %, bezogen auf die Gesamtmasse der Reibschicht.

Für die erfindungsgemäß hergestellte Reibscheibe ist es besonders vorteilhaft, wenn der oben genannte SiC-Gehalt in der Reibschicht um mindestens 10 % höher ist als der SiC-Gehalt im Tragkörper. Der Unterschied zwischen den Materialien für Tragkörper und Reibschicht zeigt sich auch in deren Dichte. Für den Tragkörper beträgt diese bevorzugt mindestens von 1,9 g/cm³, besonders bevorzugt zwischen 2,2 g/cm³ bis 2,5 g/cm³. Die Dichte der Reibschicht liegt bevorzugt bei mindestens 2 g/cm³, besonders bevorzugt im Bereich von 2,3 g/cm³ bis 2,6 g/cm³. Vorzugsweise liegt die Dichte der Reibschicht um mindestens 5 % höher als die Dichte des Tragkörpers.

Dabei können die flächigen Bereiche unterschiedlicher thermischer Ausdehnung in der Zwischenschicht in einer Ausführungsform als jeweils benachbarte Zonen mit Abmessungen in der Ebene parallel zur Boden- oder Deckfläche des scheibenförmigen oder zylinderringförmigen Körpers von bevorzugt mindestens 0,5 mm und höchstens 10 mm, besonders bevorzugt zwischen 1 mm und 8 mm vorliegen; es ist besonders bevorzugt, die Zwischenschicht als faserverstärkte Zone auszubilden, wobei die Verstärkungsfasern als Gewebe oder als Geflecht vorzugsweise in Leinwandbindung vorliegen, wobei jeweils benachbart bevorzugt rechteckige, besonders bevorzugt quadratische oder nahezu quadratische Zonen mit Seitenverhältnissen von nicht mehr als 4:1, insbesondere 1,5 : 1 bis 0,7 : 1 gebildet werden, und in weiter bevorzugter Weise die Faserorientierung in einer Zone jeweils senkrecht zu mindestens einer der benachbarten Zonen ist.

Eine andere Möglichkeit ist eine lose Bindung von Fasergarnsträngen mit faserfreien Zwischenräumen wie in einem Siebgewebe. Es ist ebenso möglich, die Garnstränge mit einer Köperbindung auszuführen, wodurch jeweils diagonal sich kreuzende oder fischgrätartige Muster bei den Entspannungsrissgefügen entstehen.

Die Art der Bindung und die günstigste Breite des Garnstrangs hängen von den thermischen Ausdehnungskoeffizienten der verwendeten keramischen Zusammensetzungen von Tragkörper und Reibschicht ab, ebenso kann die Bildung und die Domänengröße des Entspannungsrissgefüges eingestellt werden über die Abkühlgeschwindigkeit und die Menge an Zuschlägen, die nukleierend für die Rissbildung wirken.

Die Erfindung wird durch die nachstehenden Beispiele erläutert.

### Beispiel 1 Herstellung eines CFK-Vorkörpers für einen Tragkörper

Eine Mischung aus 15 kg Kurzfaserbündeln aus Kohlenstoff mit ca. 3000 Fasern je Bündel und einer mittleren Länge von 50 mm, die in einem vorangehenden Schritt mit einer wässrigen Phenolresolharzlösung getränkt, abgequetscht, bei ca. 180 °C in einem Taumeltrockner getrocknet und bei ca. 800 °C unter einem leichten Argonstrom unter Carbonisierung des auf den Fasern abgeschiedenen Phenolharzes mit einer Schicht von pyrolytischem Kohlenstoff überzogen worden waren, 6 kg Graphitpulver mit einer mittleren Korngröße von 10 µm und 9 kg eines Phenol-Resol-Harzes (®Cellobond 1203, wässrige Lösung mit einem Massenanteil an Harz von ca. 71 %, Momentive Specialty Chemicals Inc.) wurden in einem Intensivmischer während fünf Minuten vermischt. Von dieser Mischung wurden 3 kg entnommen und in eine Scheibenpressform gefüllt und bei einer Temperatur von 180 °C und einem Druck von 2 MPa zu einem zylinderringförmigen CFK-Körper mit einer Dicke von 30 mm, einem Außendurchmesser von 400 mm und einem Innendurchmesser von 200 mm verpresst. Dieser Körper wurde nach dem Entformen bei einer Temperatur von 900 °C unter Stickstoff zu einem porösen, mit Carbonfasern verstärkten Kohlenstoffkörper (CFC-Körper) carbonisiert.

### Beispiel 2 Herstellung eines CFK-Vorkörpers für eine Reibschicht

Zur Herstellung der Reibschicht-Vorkörper wurden 7,5 kg Siliciumcarbid-Pulver mit einem mittleren Korndurchmesser von 40 µm mit 2,5 kg des Phenol-Resol-Harzes ®Cellobond 1203 gemischt. 300 g dieser Mischung wurden zu einer flachen Zylinderring-Scheibe der Dicke 3 mm, einem Außendurchmesser von 400 mm und einem Innendurchmesser von 200 mm verpresst und bei 180 °C ausgehärtet, und nach dem Entformen bei einer Temperatur von 900 °C unter Stickstoff zu einem porösen, mit Siliciumcarbid-Pulver gefüllten Kohlenstoffkörper carbonisiert.

### Beispiel 3.1 Aufbringen der Zwischenschicht mit Gittergewebe

Aus 500 g SiC-Pulver mit einer mittleren Korngröße von 6,0 µm und 500 g des Phenol-Resol-Harzes ®Cellobond 1203 wurde in einem Intensivmischer eine pastöse Klebermasse angemischt. Diese wurde mit Hilfe eines Zahnspachtels als vollflächige Schicht mit ca. 1 mm Dicke auf den porösen Vorkörper für den Tragkörper aus Beispiel 1 aufgebracht. In diese Schicht wurde ein Carbonfilamentbündel-Gittergewebe in Leinwandbindung bestehend aus 3 k - Carbonfilamenten (Bündel mit ca. 3000 Einzel-Filamenten und einem Durchmesser des Einzelfilaments von ca. 6 µm) und einem Abstand der Filamentbündel von Kette und Schuss von jeweils 5 mm vom jeweils nächsten parallel liegenden Bündel auf die vollflächig aufgebrachte Klebeschicht aufgelegt. Die Filamentbündel in diesem Gitter tränkten sich dabei teilweise mit dem Kleber. Auf diese so vorbereitete Zwischenschicht wurde auf beide Seiten des Tragkörpers jeweils ein Vorkörper für die Reibschicht aufgelegt, der gebildete Stapel wurde dann durch Erhitzen unter gleichzeitiger Anwendung von Druck (0.5 MPa) auf einer Warmfließpresse bei 130 °C verklebt.

### Beispiel 3.2 Aufbringen der Zwischenschicht durch Siebdruck

Der flüssige Kleber aus Beispiel 3.1 wurde im Siebdruckverfahren auf die Boden- und Deckfläche des zylinderringförmigen Tragkörpers aufgetragen, wobei sich eine Klebschicht ausbildet, die durch sich im rechten Winkel schneidend verlaufende Furchen von 5 mm Breite unterbrochen ist und voneinander getrennte quadratische Inseln bildet. Die Schichtdicke der Klebeschicht betrug 0,8 mm. Auf diese Klebeschichten wurden die Vorkörper für die Reibschichten aufgelegt, und der gebildete Stapel wurde wie im Beispiel 3.1 verpresst.

### Beispiel 3.3 Aufbringen der Zwischenschicht durch Siebdruck

Aus 500 g Titanboridpulver mit einer mittleren Korngröße von 4,5 µm und 500 g des Phenol-Resol-Harzes ®Cellobond 1203 wurde in einem Intensivmischer eine pastöse Klebermasse angemischt. Der flüssige Kleber wurde im Siebdruckverfahren auf die Boden- und Deckfläche des zylinderringförmigen Tragkörpers aufgetragen, wobei sich eine Klebschicht ausbildet, die durch sich im rechten Winkel schneidend verlaufende Furchen von 5 mm Breite unterbrochen ist und voneinander getrennte quadratische Inseln bildet. Die Schichtdicke der Klebeschicht betrug 0,8 mm. Auf diese Klebeschichten wurden die Vorkörper für die Reibschichten aufgelegt, und der gebildete Stapel wurde wie im Beispiel 3.1 verpresst.

### Beispiel 3.4 Aufbringen einer Zwischenschicht als Folie

Aus 500 g SiC-Pulver mit einer mittleren Korngröße von 6,0 µm und 500 g des Phenol-Resol-Harzes ®Cellobond 1203 wurde in einem Intensivmischer eine pastöse Klebermasse angemischt. Diese wurde in einer Schichtdicke von 1,4 mm auf eine Aluminium-Trägerfolie augestrichen und in einem Ofen unter einem Stickstoffstrom bei 90 °C getrocknet. Die gebildete Verbundfolie wurde zu einem Gitter-Raster gestanzt, wobei jeweils 4 mm breite Stege in rechtwinklig zueinander verlaufenden Struktur gebildet wurden, getrennt durch quadratische Leerstellen mit eine Kantenlänge von ebenfalls 4 mm. Diese Folie wurde mit der Phenolharz-Seite auf den vorgewärmten Tragkörper unter leichtem Druck aufgelegt, und die Aluminiumträgerfolie wurde dann abgezogen, wobei die Gitterstrukturfolie auf dem porösen Tragkörper zurückblieb. Nach Auflegen der Vorkörper für die Reibschicht wurde der gebildete Stapel wie in Beispiel 3.1 gepresst.

### Beispiel 3.5 Aufbringen einer Zwischenschicht als Folie

Aus 500 g Titanboridpulver mit einer mittleren Korngröße von 4,5 µm und 500 g des Phenol-Resol-Harzes ®Cellobond 1203 wurde in einem Intensivmischer eine pastöse Klebermasse angemischt. Diese wurde in einer Schichtdicke von 1,4 mm auf eine Aluminium-Trägerfolie augestrichen und in einem Ofen unter einem Stickstoffstrom bei 90 °C getrocknet. Die gebildete Verbundfolie wurde zu einem Gitter-Raster gestanzt, wobei jeweils 4 mm breite Stege in rechtwinklig zueinander verlaufenden Struktur gebildet wurden, getrennt durch quadratische Leerstellen mit eine Kantenlänge von ebenfalls 4 mm. Diese Folie wurde mit der Phenolharz-Seite auf den vorgewärmten Tragkörper unter leichtem Druck aufgelegt, und die Aluminiumträgerfolie wurde dann abgezogen, wobei die Gitterstrukturfolie auf dem porösen Tragkörper zurückblieb. Nach Auflegen der Vorkörper für die Reibschicht wurde der gebildete Stapel wie in Beispiel 3.1 gepresst.

### Beispiel 3.6 Aufbringen einer Klebeschicht mit einem numerisch gesteuerten Applikator

Aus 5 kg SiC-Pulver mit einer mittleren Korngröße von 6,0 µm und 5 kg des Phenol-Resol-Harzes ®Cellobond 1203 wurde in einem Intensivmischer eine pastöse Klebermasse angemischt und anschließend bei 70 °C unter verminderten Druck bis auf einen RestWassergehalt (Massenanteil) von 0,5 % eingedickt. Diese Masse wurde bei dieser Temperatur mit einem Klebestrangapplikator als Strang mit 2 mm Durchmesser in einem rechtwinkligen Karomuster mit einem Abstand von jeweils 6 mm auf den Tragkörper beidseitig aufgetragen. Nach Auflegen der Vorkörper für die Reibschicht wurde der gebildete Stapel wie in Beispiel 3.1 gepresst.

### Beispiel 3.7 Aufbringen einer Klebeschicht mit einem numerisch gesteuerten Applikator

Es wurde verfahren wie in Beispiel 3.6, jedoch ohne Zusatz des SiC-Pulvers. Auf den Tragkörper mit der Klebestrangbeschichtung wurden gemahlene Carbonfasern mit einer mittleren Länge von 0,6 mm aufgeschüttet, und die lose verbliebenen Fasern mit einem Stickstoffstrom weggeblasen. Es verblieb ein Karomuster, wobei die Klebestränge eine Faserschicht aufwiesen. Durch Wägung eines einseitig beschichteten Tragkörper-Vorkörpers wurde festgestellt, dass die verbliebene Fasermasse 40 % der Masse des aufgetragenen Klebstoffs betrug. Auf den beidseitig beschichteten und wie oben beschrieben mit Fasern versehenen Tragkörper wurden die Vorkörper für die Reibschichten aufgelegt, und der gebildete Stapel wurde wie in Beispiel 3.1 gepresst.

### Beispiel 4 Pyrolyse und Silicieren des Verbundkörpers

Nach der Pyrolyse der verklebten Stapel der Beispiele 3.1 bis 3.7 bei 900 °C unter Stickstoffatmosphäre zu einem porösen Vorkörper für die Bremsscheibe erfolgte die Silicierung. Dabei wurde dem porösen Vorkörper bei einer Temperatur von 1700 °C unter vermindertem Druck (3 hPa) flüssiges Silicium über poröse CFC-Dochte zugeführt, das mit dem bei der Carbonisierung gebildeten Kohlenstoff in einer exothermen Reaktion zu Siliciumcarbid reagierte. Beim Abkühlen auf Raumtemperatur kam es aufgrund der unterschiedlichen thermischen Ausdehnungskoeffizienten der Zwischenschicht zu einem Spannungszustand in den resultierenden keramischen Körpern 4.1 bis 4.7, der sich im Bereich der Reibschicht zumindest teilweise durch Bildung von Rissen abbaute. Die Struktur des dabei eingebrachten Gittergewebes spiegelt sich dabei in der Struktur des Entspannungsrissgefüges der Reibschicht wieder.

Als Vergleich wurde ein verklebter Stapel aus einem Vorkörper für einen Tragkörper hergestellt, wobei auf jeder der Deckflächen jeweils ein Vorkörper für die Reibschichten mit dem oben genannten Phenolharz allein verklebt wurde. Der Stapel wurde auf die gleiche Weise zu carbonisiert und siliciert zu dem keramischen Körper 4.0.

### Beispiel 5 Prüfung des Nassansprechverhaltens

Die keramischen Körper 4.0 bis 4.7 wurden auf einem Prüfstand unter Trocken- und Nass-Bedingungen getestet, wobei aus einer Rotationsfrequenz entsprechend einer Geschwindigkeit des Kraftfahrzeugs von 80 km/h gebremst wurde mit einem Auflagedruck der Bremsbeläge von 3 MPa bis zu einer Rotationsfrequenz entsprechend einer Geschwindigkeit des Kraftfahrzeugs von 30 km/h. Der Verlauf des Wertes für die Coulomb'sche Reibungszahl während der Zeit für das Abbremsen von 80 km/h auf 30 km/h und die verflossene Zeit wurden für alle Paarungen der Bremsscheiben 4.0 bis 4.7 mit jeweils demselben Bremsbelagsmaterial (mit Phenolharz gebundener Belag enthaltend Massenanteile von: 22 % Phenolharz, 6 % Aramidfaserpulp, 20 % Bariumsulfat, 10 % Kaliumtitanat, 3 % Kupfer in Faserform, 3 % Calciumhydroxid, 10 % gemahlene Erdnussschalen, 3 % Vermiculit, 3 % Glimmer, 3 % Styrol-Butadien-Kautschuk, 3 % Molybdänsulfid, 5 % Graphit, 4 % Antimonsulfid und 5 % Zirkonsilicat) als Mittelwert von jeweils zehn Messungen aufgezeichnet. Die Ergebnisse sind in den Abbildungen "Beispiel 4.0" bis "Beispiel 4.7" dargestellt. Zur Messung des Nassbremsverhaltens wurde der Bremsscheibenrotor von beiden Seiten in der Messkammer mit Salzwasser besprüht (3 L/min, Massenanteil von Natriumchlorid in der Salzlösung von 3 g/100 g, Massenanteil von Calciumchlorid in der Salzlösung 0,4 g/100 g).

In Wiederholungsversuchen ergab sich für Bremsscheiben gemäß den Beispielen 4.1, 4.2,4.4 und 4.6 die niedrigste Streuung der Werte, und die kürzeste Verzögerung des Einsetzen des Bremswirkung, die als Abfall der Reibungszahl nach dem ersten Ansteig in den Abbildungen zu sehen ist. Die Oberflächen dieser Bremsscheiben wiesen an der Reibschicht ein gleichmäßiges Rissmuster mit einer Maschenweite der Risse von ca. 3 mm bis 6 mm auf. Es ist auf die Weise gemäß der Erfindung auch möglich, die Bremscharakteristik im Fall des Nassbremsens gezielt einzustellen, also beispielsweise auf eine möglichst niedrigen Abfall der Reibungszahl nach dem ersten Anstieg, auf eine möglichst hohe Reibungszahl im zweiten Anstieg, oder auf eine möglichst gleichmäßige Reibungszahl nach dem ersten Anstieg.

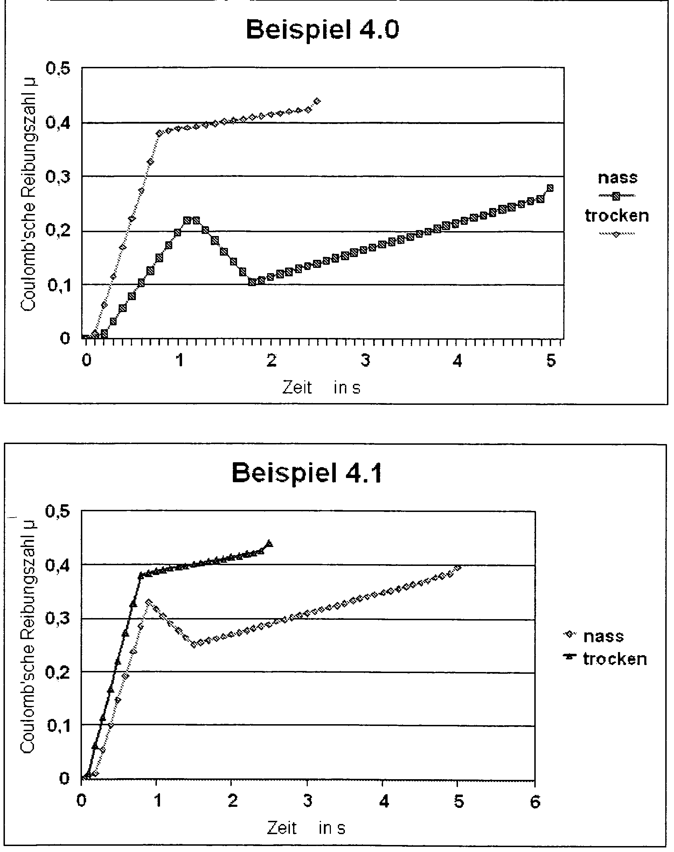

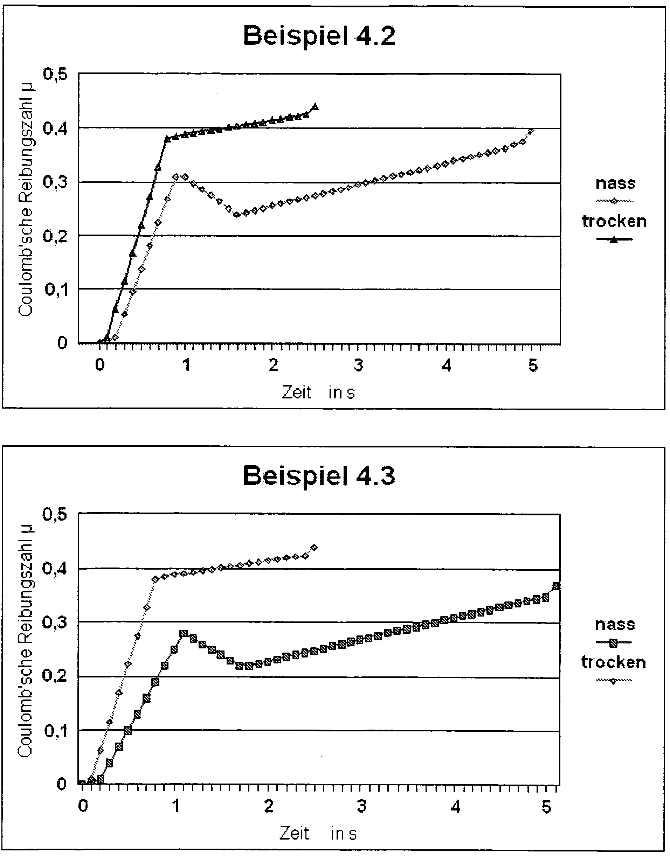

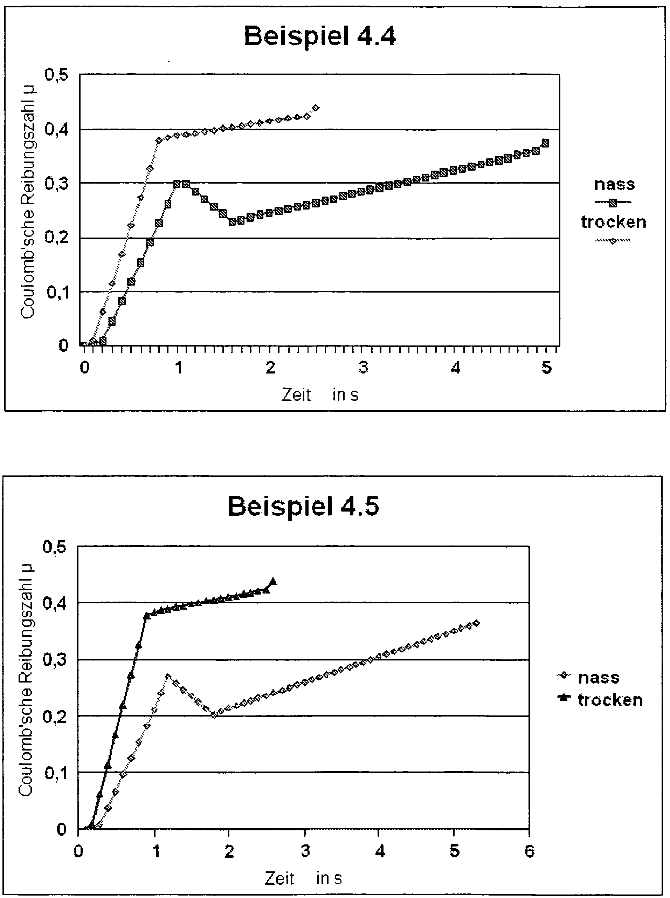

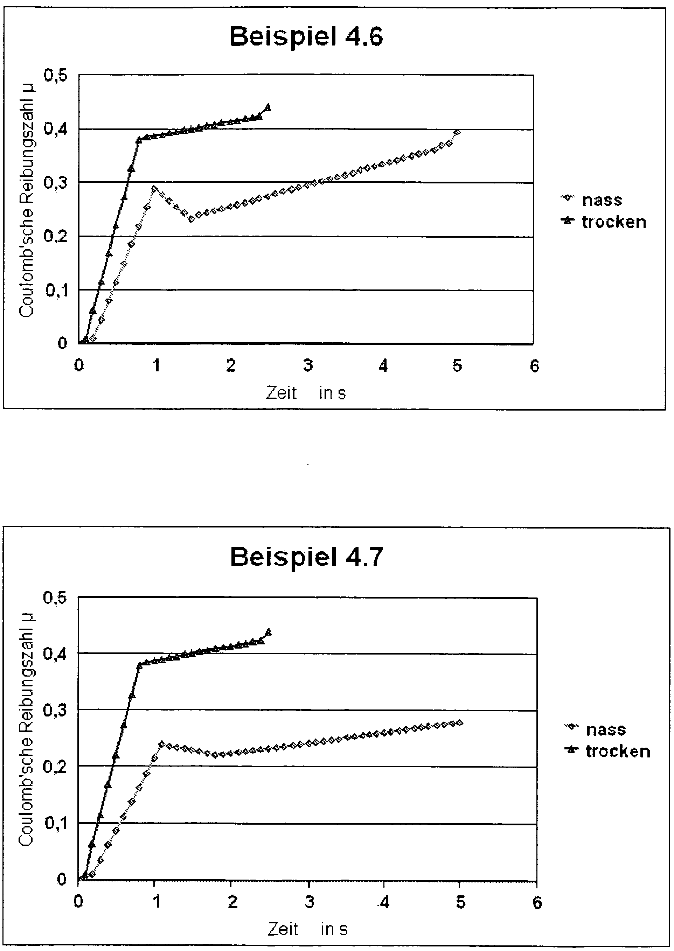

## Patentansprüche

1. Verfahren zur Herstellung von zylinderringförmigen Reibscheiben mit einem definierten Entspannungsrissgefüge in der Reibschicht, umfassend die Schritte
- Herstellung eines Vorkörpers für den Tragkörper aus porösem Kohlenstoff, der bevorzugt mit hochtemperaturbeständigen Fasern verstärkt ist,
- Herstellung eines Vorkörpers für den Reibschichtkörper aus porösem Kohlenstoff, der bevorzugt Siliciumcarbid als Füllstoff enthält,
- Aufkleben mindestens eines Reibschicht-Vorkörpers auf dem Tragschichtvorkörper mittels einer Klebeschicht, enthaltend als organisches Bindemittel ein härtbares Kunstharz sowie gegebenenfalls Pech und/oder einen thermoplastischen Kunststoff, und mindestens einen der Zuschläge ausgewählt aus elementarem Kohlenstoff, Carbiden, Nitriden und Siliciden von Metallen und von Halbmetallen der Gruppen 3b, 4b und 5b des Periodischen Systems der Elemente, hochtemperaturbeständigen Fasern ausgewählt aus Carbonfasern, Fasern von binären und ternären Verbindungen der Elemente Si, C, N, B, O, und P, und Whiskern von refraktären Metallen,
- Pyrolyse des gebildeten Verbunds unter Ausschluss von oxydierenden Stoffen unter Bildung von Kohlenstoff aus dem organischen Bindemittel, und
- Infiltrieren des carbonisierten Verbundes mit flüssigem Silicium oder einer flüssigen Legierung enthaltend einen Massenanteil von mindestens 50 % an Silicium unter Bildung von Carbiden aus Silicium und gegebenenfalls den anderen Legierungsbestandteilen, und
- Abkühlen des silicierten Verbundes mit einem wählbaren Temperaturprofil,
bei dem aus der Klebeschicht durch die Schritte Carbonisierung und Infiltration mit anschließenden Reaktion zu Carbiden eine Zwischenschicht gebildet wird,
**dadurch gekennzeichnet, dass** die Klebeschicht gebildet wird
- aus einem Carbonfilamentbündel-Gittergewebe in Leinwandbindung, das mit einem Klebstoff getränkt oder beschichtet ist, der durch Erhitzen unter Ausschluss von oxydierenden Substanzen auf Temperaturen von 800 °C oder mehr in Kohlenstoff umgewandelt werden kann,
- durch ungleichmäßiges Auftragen eines Klebstoffs bevorzugt in Form eines Gitters, das sich weiter bevorzugt in rechtem Winkel schneidet, oder eines Spinnennetzes mit konzentrischen Kreisen oder Spiralen und Radien, die diese Kreise oder Spiralen schneiden, durch Siebdruck, oder durch einen rechnergesteuerten Applikator oder
- durch Verfestigen des Klebstoffs auf einer antiadhäsiv behandelten glatten Oberfläche zur Bildung einer Folie, aus der ein gitterförmiger Aufleger gestanzt wird, der durch weiteres Erwärmen wieder in einen klebenden Zustand übergeht, bevor der Zustand eines vernetzten und unschmelzbaren Duroplasten erreicht wird.

2. Verfahren nach Anspruch 1, **dadurch gekennzeichnet, dass** der Klebstoff ein duroplastisches Harz, oder Pech, oder eine Mischung von diesen ist, wobei der Klebstoff auch weitere Zuschläge von wärmebeständigen anorganischen Materialien enthalten kann.

3. Verfahren nach Anspruch 2, **dadurch gekennzeichnet, dass** als wärmebeständige anorganische Materialien Pulver von Siliciumcarbid, Borcarbid, Titanborid, oder Bornitrid verwendet werden.

4. Verfahren nach Anspruch 1, bei dem der Klebstoff durch Aufstreuen oder durch Zumischen von wärmebeständigen Fasern ausgewählt aus Fasern aus Kohlenstoff, aus Siliciumcarbid oder Siliciumnitrid, sowie Whiskern aus keramischen oder metallischen Werkstoffen so modifiziert wird, dass beim Erstarren durch diese Beimischungen anisotrope Gebilde entstehen.

5. Verfahren nach einem oder mehreren der Ansprüche 1 bis 4, **dadurch gekennzeichnet, dass** die in der Zwischenschicht ausgebildete Struktur eine mittlere Ausdehnung der einzelnen flächigen Bereiche, die durch die Carbonisierung zu Kohlenstoff-haltigen Schichten mit unterschiedlichem thermischen Ausdehnungskoeffizienten werden, von 2 mm bis 8 mm aufweist.

6. Verfahren nach einem oder mehreren der Ansprüche 1 bis 5, **dadurch gekennzeichnet, dass** die Dicke der Bereiche in der Zwischenschicht im carbonisierten Zustand zwischen 0,2 mm und 2 mm beträgt.

## Claims

1. Method for producing cylindrical annular friction discs having a defined relief crack microstructure in the friction layer, comprising the steps of
- producing a preform for the support body made of porous carbon, which preform is preferably reinforced with high-temperature-resistant fibres,
- producing a preform for the friction layer body made of porous carbon, which preform preferably contains silicon carbide as a filler,
- adhesively bonding at least one friction layer preform to the preform for the support layer by means of an adhesive layer containing, as an organic binder, a curable synthetic resin and optionally pitch and/or a thermoplastic, and at least one additive selected from the group consisting of elemental carbon, carbides, nitrides and silicides of metals and semi-metals of groups 3b, 4b and 5b of the periodic table of the elements, high-temperature-resistant fibres selected from carbon fibres, fibres of binary and ternary compounds of the elements Si, C, N, B, O and P, and whiskers of refractory metals,
- pyrolysing the formed composite with the elimination of oxidising agents, with the formation of carbon from the organic binder,
- infiltrating the carbonised composite with liquid silicon or a liquid alloy containing a mass fraction of at least 50 % silicon, with the formation of carbides of silicon and optionally of the other alloy components, and
- cooling the siliconised composite according to a selectable temperature profile, in which an intermediate layer is formed from the adhesive layer by the steps of carbonisation and infiltration with subsequent reaction to form carbides,
**characterised in that** the adhesive layer is formed
- from a carbon filament bundle mesh which has a plain weave and is impregnated or coated with an adhesive which can be converted into carbon by heating with the elimination of oxidising substances to temperatures of 800 °C or more,
- by uneven application of an adhesive preferably in the form of a grid which more preferably intersects at right angles, or a spider's web having concentric circles or spirals and radii that intersect these circles or spirals, by screen printing or by means of a computer-controlled applicator, or
- by solidifying the adhesive on an anti-adhesively treated smooth surface to form a film, from which a grid-shaped overlay is punched out, which returns to an adhesive state after further heating before reaching the state of a cross-linked and non-melting thermoset.

2. Method according to claim 1, **characterised in that** the adhesive is a thermosetting resin, or pitch, or a mixture thereof, the adhesive also being able to contain other additives of heat-resistant inorganic materials.

3. Method according to claim 2, **characterised in that** powders of silicon carbide, boron carbide, titanium boride or boron nitride are used as heat-resistant inorganic materials.

4. Method according to claim 1, wherein, by sprinkling or mixing in heat-resistant fibres selected from the group consisting of fibres of carbon, of silicon carbide or of silicon nitride, and whiskers of ceramic or metallic materials, the adhesive is modified in such a way that when the adhesive solidifies these admixtures result in an anisotropic entity.

5. Method according to one or more of claims 1 to 4, **characterised in that** the structure formed in the intermediate layer has an average expansion of the individual flat regions, which are transformed by carbonisation into carbon-containing layers having different coefficients of thermal expansion, of from 2 mm to 8 mm.

6. Method according to one or more of claims 1 to 5, **characterised in that** the thickness of the regions in the intermediate layer is between 0.2 mm and 2 mm in the carbonised state.

## Revendications

1. Procédé de fabrication de disques de friction en forme d'anneau cylindrique avec une structure de fissure de détente définie dans la couche de friction, comprenant les étapes suivantes :
- fabrication d'un pré-corps pour le corps porteur en carbone poreux qui est de préférence renforcé de fibres résistantes aux températures élevées,
- fabrication d'un pré-corps pour le corps de disque de friction en carbone poreux qui contient de préférence du carbure de silicium en tant que charge,
- collage d'au moins un pré-corps de couche de friction sur le pré-corps de couche porteuse au moyen d'une couche de colle, contenant en tant que liant organique une résine synthétique durcissable ainsi qu'éventuellement de la poix et/ou une matière thermoplastique, et au moins une des additions sélectionnées parmi le carbone élémentaire, des carbures, des nitrures et des siliciures de métaux et de semi-métaux des groupes 3b, 4b et 5b du système périodique des éléments, des fibres résistantes aux températures élevées sélectionnées parmi des fibres de carbone, des fibres de composés binaires et ternaires des éléments Si, C, N, B, O et P et des barbes de métaux réfractaires,
- pyrolyse du composite formé avec exclusion de matières oxydantes avec formation de carbone à partir du liant organique, et
- infiltration du composite carbonisé avec du silicium fluide ou un alliage fluide contenant une proportion massique d'au moins 50 % de silicium avec formation de carbures à partir du silicium et éventuellement des autres constituants de l'alliage, et
- refroidissement du composite silicé avec un profil de température pouvant être sélectionné, dans lequel une couche intermédiaire est formée à partir de la couche de colle par les étapes de carbonisation et d'infiltration suivies de la réaction en carbures,
**caractérisé en ce que** la couche de colle est formée
- à partir d'un treillis de faisceaux de filaments de carbone, dans un tissu à armure toile, qui est imbibé ou revêtu d'une colle qui peut être transformée en carbone par chauffage à des températures de 800 °C ou plus avec exclusion de substances oxydantes,
- par application irrégulière d'une colle de préférence sous la forme d'un treillis qui se coupe également de préférence à angle droit, ou d'une toile d'araignée avec des cercles ou spirales concentriques et des rayons qui coupent ces cercles ou spirales, par sérigraphie, ou par un applicateur commandé par ordinateur ou
- par solidification de la colle sur une surface lisse traitée de façon antiadhésive pour la formation d'une feuille à partir de laquelle un élément d'application en forme de treillis est découpé qui se transforme, par un chauffage supplémentaire, de nouveau en un état adhésif, avant que l'état d'un matériau thermodurcissable réticulé et non fusible soit atteint.

2. Procédé selon la revendication 1, **caractérisé en ce que** la colle est une résine thermodurcissable ou de la poix ou un mélange de ceux-ci, la colle pouvant contenir également d'autres additions de matériaux anorganiques résistants à la chaleur.

3. Procédé selon la revendication 2, **caractérisé en ce que** des poudres de carbure de silicium, de carbure de bore, de borure de titane ou de nitrure de bore sont utilisées en tant que matériaux anorganiques résistants à la chaleur.

4. Procédé selon la revendication 1, dans lequel la colle est modifiée par saupoudrage ou par addition de fibres résistantes à la chaleur sélectionnées parmi des fibres de carbone, de carbure de silicium ou de nitrure de silicium, ainsi que de barbes en matériaux céramiques ou métalliques de telle sorte que, lors de la solidification, des complexes anisotropes résultent de ces opérations de mélange.

5. Procédé selon l'une ou plusieurs des revendications 1 à 4, **caractérisé en ce que** la structure constituée dans la couche intermédiaire présente une dilatation moyenne de 2 mm à 8 mm des différentes zones plates qui, sous l'action de la carbonisation, évoluent en couches contenant du carbone ayant différents coefficients de dilatation thermiques.

6. Procédé selon l'une ou plusieurs des revendications 1 à 5, **caractérisé en ce que** l'épaisseur des zones dans la couche intermédiaire, dans l'état carbonisé, est comprise entre 0,2 mm et 2 mm.
